# EUROPÄISCHE PATENTSCHRIFT

(11) **EP 0 681 290 B1**
(45) Veröffentlichungstag und Bekanntmachung des Hinweises auf die Patenterteilung: **25.07.2001**
(21) Anmeldenummer: 95106037.5
(22) Anmeldetag: 22.04.1995
(51) Int. Cl.: G11B 11/10, G11B 7/125

(54) **Abtastgerät mit Adaptation**
Scanning device with adaptation
Dispositif de balayage avec adaptation

(30) Priorität: 03.05.1994 DE 4415508
(43) Veröffentlichungstag der Anmeldung: 08.11.1995
(73) Patentinhaber: DEUTSCHE THOMSON-BRANDT GMBH, 78048 Villingen-Schwenningen (DE)
(72) Erfinder: Zucker, Friedhelm, D-78052 Villingen-Schwenningen (DE)

(56) Entgegenhaltungen:
- EP-A- 0 310 795
- EP-A- 0 404 247
- EP-A- 0 565 376
- US-A- 4 908 815
- US-A- 4 937 799

## Beschreibung

Die Erfindung betrifft ein Aufzeichungs- und/oder Wiedergabegenit für optische Aufzeichnungsträger. Mit einem solchem Abtastgerät können Aufzeichnungsträger gelesen und/oder Informationen auf Aufzeichnungsträgern gespeichert werden, wobei die Qualität und Quantität der Aufzeichnung oder Wiedergabe wesentlich vom Aufzeichnungsträger beeinflußt werden. Um nachteilige Einflüsse des Aufzeichnungsträgers bei der Aufzeichnung und/oder Wiedergabe zu kompensieren, ist ein Abtastgerät mit Adaptation vorgesehen. Der Aufzeichnungsträger kann ein optischer Aufzeichnungsträger in einem entsprechenden Aufzeichnungs- und/oder Wiedergabegerät sein. Bei einem optischen Aufzeichnungsträger können Daten oder Informationen in sogenannten Pits bei der CD und/oder magnetooptischen Domänen bei der MOD bzw. einer ROM-RAM oder in einer anderen Art gespeichert sein.

Es ist allgemein bekannt, daß Aufzeichnungsträger, wie beispielsweise optische Aufzeichnungsträger, herstellungsbedingt, durch Alterung oder Verschmutzung unterschiedliche Reflektionseigenschaften aufweisen. Da der Aufzeichnungsträger während der Aufzeichnung oder Wiedergabe von Informationen als Gerätebestandteil anzusehen ist, beeinflussen sowohl seine Eigenschaften als auch die Eigenschaften des Gerätes die Qualität und Quantität der aufgezeichneten und/oder wiedergegebenen Informationen. Diese Beeinflussung betrifft insbesondere die Eigenschaften von Regelkreisen. Wird beispielsweise ein anderer Aufzeichnungsträger in das optische Abtastgerät eingelegt oder treten Veränderungen hinsichtlich der Laserleistung auf, ändert sich die Amplitude des vom Aufzeichnungs- bzw. Informationsträger reflektierten Signals und dadurch die Schleifenverstärkung von Regelkreisen. Dies kann dazu führen, daß bei zu hoher Schleifenverstärkung die Stabilität des Regelkreises verloren geht oder wenn die Regelverstärkung zu gering wird, daß die Regelabweichung zu groß wird, um eine zuverlässige Funktion des Gerätes bei der Aufzeichnung und/oder Wiedergabe zu gewährleisten. Es ist bereits bekannt die Lichtleistung Änderungen der Reflektivität des Aufzeichnungsträgers entsprechend zu erhöhen beziehungsweise zu verringern, vgl. US-A-4 908 815. Zum Verringern der Fehlerrate beim Schreiben auf einen optischen Aufzeichnungsträger, bei dem sich die Reflektivität des Aufzeichnungsträgers verändert, wird die Leistung der Strahlungsquelle mit einem Fehlersignal geregelt, das der Differenz zwischen Steuer und Rückkopplungssignalen entspricht.
Zum Eliminieren der Modulation, die ein von der Strahlungsquelle des Schreibstrahls erzeugter Lesestrahl aufweist, ist es bekannt, das Lesesignal durch ein Signal zu dividieren, das der momentanen Intensität der Strahlungsquelle entspricht, vgl. EP-A-0 404 247, und gemäß EP-A-0 310 795 ist es bekannt, Schwankungen der Intensität des vom Aufzeichnungsträger reflektierten Lichts durch Steuern der Lichtleistung des Lasers auszugleichen.
Ferner ist es bekannt, die Regelkreisverstärkung des Spurservos und Fokusservos in Abhängigkeit der Diskreflektivität zu schalten, vgl. JP-A-61 283 035. Aufzeichnungsträger unterschiedlicher Reflektivität werden dadurch unterschieden, daß beim Bewegen der Objektivlinse zur Disk der Maximalwert des Fokusfehlersignals bei geöffnetem Regelkreis detektiert und gehalten wird.

Es ist deshalb Aufgabe der Erfindung, diese Nachteile der Abtastgeräte, die insbesondere in der Beeinflussung der Regelkreisverstärkung im laserregelkreis des Abtastgerätes durch den Aufzeichnungsträger bestehen, zu vermeiden.

Diese Aufgabe wird mit den im Anspruch 1 angegebenen Mittel gelöst. Vorteilhafte Ausführungen und Weiterbildungen sind in Unteransprüchen angegeben.

Die Merkmale des Oberbegriffs von Anspruch 1 sind aus US-A-4 908 815 bekannt.

Zur Adaptation bzw. zur Anpassung an den Aufzeichnungsträger sieht die Erfindung ein Mittel zum Detektieren des Verhältnisses der Intensität eines Informationsträgersignals zur aufgewendeten Abtastleistung vor, mit dem die Regelkreisverstärkung mindestens eines Regelkreises des Abtastgerätes beeinflußt wird. Hierzu wird beispielsweise bei einem optischen Abtastgerät die vom optischen Aufzeichnungsträger reflektierte Lichtleistung bzw. Intensität des reflektierten Lichts mit einem Photodetektor gemessen und vorzugsweise mit einem Dividierer ein Verhältnis zur aufgewendeten Laserleistung gebildet wobei die zur Abtastung aufgewendete Laserleistung von einem Signal der Monitordiode des Lasers repräsentiert wird .
Mit diesem Verhältnis, das ein Maß für die Reflektivität des Aufzeichnungsträgers darstellt, wird dann eine optimale Regelverstärkung des Regelkreises eingestellt. Hierzu wird die Regelkreisverstärkung reziprok zur Reflektivität des Aufzeichnungsträgers beeinflußt. Dadurch wird erreicht, daß die Regelkreisverstärkung in Regelkreisen des Abtastgerätes nicht mehr nachteilig vom Reflektionsgrad des Aufzeichnungsträgers beeinflußt wird. Das Abtastgerät wird durch diese Maßnahme zu einem Abtastgerät mit Adaptation, d.h. daß das Abtastgerät in der Lage ist, sich an unterschiedliche Aufzeichnungsträger anzupassen. Dies wird nachfolgend anhand eines Ausführungsbeispiels für ein optisches Abtastgerät näher erläutert, das sowohl zur Wiedergabe von Informationen von einer CD oder MOD als auch zur Aufzeichnung und Wiedergabe mit Aufzeichnungsträgern geeignet ist, die sowohl Pits als auch magnetische Domänen aufweisen. Es sei angemerkt, daß nicht nur die Regelkreisverstärkung im Laserregelkreis vom Reflektionsgrad des Aufzeichnungsträgers abhängig ist, sondern auch andere Regelkreise des Abtastgerätes, wie beispielsweise die Servoregelkreise vom Reflektionsgrad des Aufzeichnungsträgers hinsichtlich ihrer Regelkreisverstärkung beeinflußt werden. Die Reflektivität beeinflußt bei einem optischen Aufzeichnungsträger die Amplitude der detektierten Signale und hat somit Einfluß auf die Regelkreisverstärkung. Mit dem genannten Mittel kann auch hierauf in vorteilhafter Weise Einfluß genommen werden, so daß sich die Erfindung nicht auf einen Laserregelkreis beschränkt. Die Erfindung ist weiterhin grundsätzlich in allen Arten von Aufzeichnungs- und Wiedergabegeräten anwendbar, bei denen zur Aufzeichnung oder Wiedergabe von Informationen eine Aufzeichnungs- oder Abtastleistung verwendet wird.

Nachfolgend wird die Erfindung anhand von Zeichnungen näher erläutert. Es zeigen:
- Fig. 1: Prinzipschaltbild zur Adaptation und
- Fig. 2: Blockschaltbild für ein optisches Abtastgerät mit Adaptation

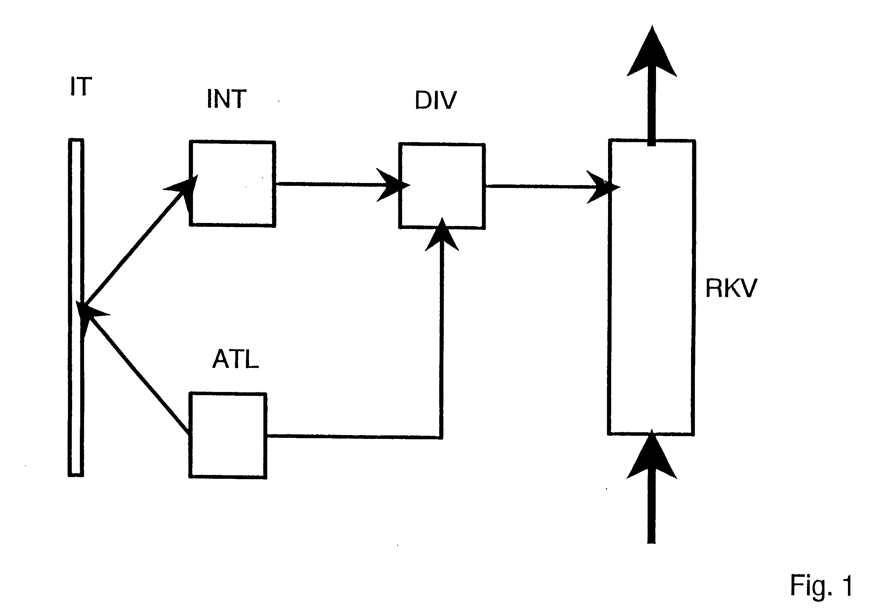

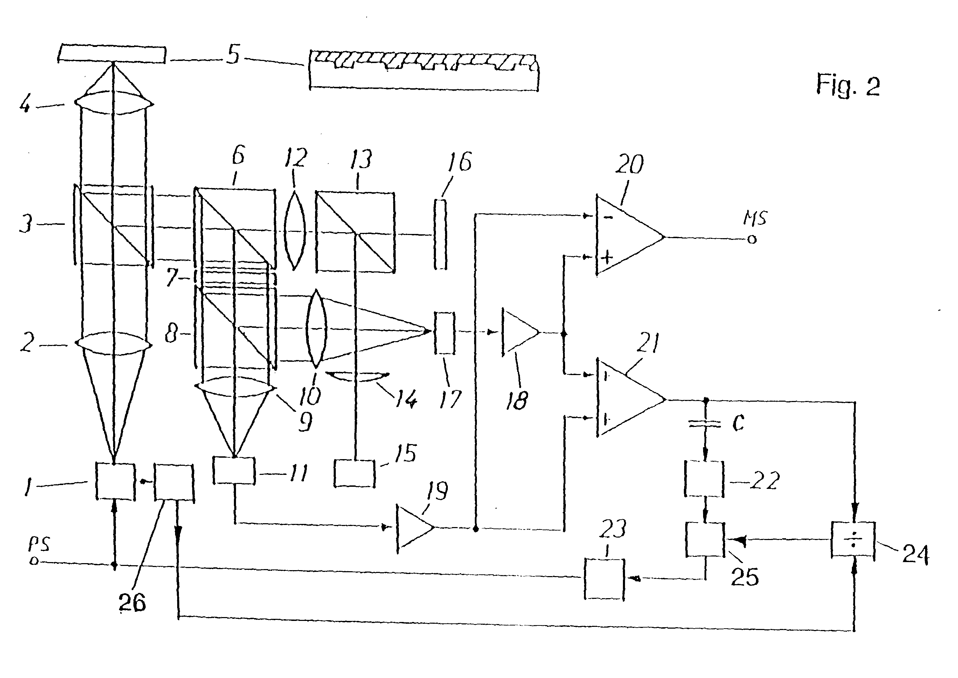

Zur Erläuterung der Erfindung ist in Fig.1 ein Prinzipschaltbild angegeben, das einen Aufzeichnungs- bzw. Informationsträger IT, eine Einrichtung ATL zum Bereitstellen von Abtastleistung, eine Vorrichtung INT zum Detektieren vom Aufzeichnungsträger IT gewonnener Signale, einen Dividierer DIV und einen hinsichtlich seiner Verstärkung einstellbaren Regelkreisverstärker RKV zeigt. Zum Realisieren eines Abtastgerätes mit Adaptation bzw. zur Anpassung des Aufzeichnungs- und/oder Wiedergabegerätes an den Aufzeichnungsträger IT ist ein Mittel zum Detektieren des Verhältnisses der Intensität eines Aufzeichnungsträgersignals zur aufgewendeten Abtastleistung, mit dem die Regelkreisverstärkung beeinflußt wird, vorgesehen. Das Mittel zum Detektieren des Verhältnisses wird vorzugsweise von einem Dividierer DIV gebildet und die Intensität des Informationträgersignals mit der Vorrichtung INT zum Detektieren vom Aufzeichnungsträger IT gewonnener Signale festgestellt. Die Einrichtung ATL zum Bereitstellen von Abtastleistung weist einen mit dem Dividierer DIV verbundenen Anschluß auf, der ein der aufgewendeten Abtast- oder Aufzeichnungsleistung entsprechendes Signal bereitstellt. Mit dem Dividierer DIV wird ein Verhältnis aus vom Aufzeichnungsträger IT abgegebener Intensität zur aufgewendeten Abtastleistung gebildet. Bei einem optischen Aufzeichnungsträger IT ist dieses Verhältnis ein Maß für die Reflektivität bzw. den Reflektionsgrad des Aufzeichnungsträgers. Da Aufzeichnungsträger herstellungsbedingt, durch Alterung oder Verschmutzung unterschiedliche Reflektionseigenschaften aufweisen, können somit die Qualität des verwendeten Aufzeichnungsträgers IT festgestellt und ein oder mehrere Regelkreise hinsichtlich ihrer Regelkreisverstärkung beeinflußt werden. Es erfolgt eine Adaptation des Aufzeichnungs- oder Wiedergabegerätes an den Aufzeichnungsträger IT.
Dadurch wird vorteilhaft erreicht, daß differierende Eigenschaften von Aufzeichnungsträgern IT sich nicht mehr nachteilig auf die Wiedergabe oder Aufzeichnung von Informationen auswirken.
Wie anhand einer nachfolgenden Ausführung gezeigt wird, ist dies auch bei einem Abtastgerät möglich, das zur Aufzeichnung und Wiedergabe von Informationen mit Aufzeichnungsträgern IT geeignet ist, bei denen die Informationen bzw. Daten sowohl in Pits als auch in magnetischen Domänen gespeichert sind. Hierzu ist in Fig.2 ein Blockschaltbild für ein optisches Abtastgerät mit Adaptation angegeben. Eine optische Abtastvorrichtung zum gleichzeitigen Lesen von Daten bzw. Informationen eines speziellen Aufzeichnungsträgers 5, bei dem die Informationen sowohl in Pits als auch in magnetischen Domänen gespeichert sind, ist bereits aus DE-OS 37 32 874 bekannt. Der spezielle Aufzeichnungsträger 5 ist eine sogenannte ROM-RAM-Disc. Die optische Abtastvorrichtung ist jedoch auch zum Lesen von Aufzeichnungsträgern 5 geeignet, bei denen Informationen bzw. Daten ausschließlich in Pits oder ausschließlich in magnetischen Domänen gespeichert sind. Gemäß Figur 2, die Fig. 1 der DE-OS 37 32 874 um die Mittel zur Adaptation ergänzt darstellt, wird ein Daten abtastender Lichtstrahl von einer Lichtquelle 1, die meist ein Laser ist, über eine Linse 2, einen Prismenstrahlteiler 3 und eine weitere Linse 4 auf den speziellen Aufzeichnungsträger 5 fokussiert, der den Lichtstrahl über die Linse 4 zurück zum Prismenstrahlteiler 3 reflektiert. Vom Prismenstrahlteiler 3 wird der reflektierte Lichtstrahl im rechten Winkel auf einen Prismenstrahlteiler 6 gelenkt, der den Lichtstrahl über eine λ /2 Platte 7 zu einem Polarisationsstrahlteiler 8 lenkt. Im Polarisationsstrahlteiler 8 wird nun der Lichtstrahl über eine Linse 9 auf einen ersten Photodetektor 11 gelenkt, wenn seine Polarisationsebene in die eine Richtung gedreht ist. Dagegen wird der Lichtstrahl vom Polarisationsstrahlteiler 8 über eine Linse 10 auf einen zweiten Photodetektor 17 gelenkt, wenn seine Polarisationsebene in die andere Richtung gedreht ist. Die Photospannung des ersten Photodetektors 11 wird dem ersten Eingang eines Summationsverstärkers 21 und dem Subtraktionseingang eines Differenzverstärkers 20 zugeführt. Die Photospannung des zweiten Photodetektors 17 wird dem Eingang des Summationsverstärkers 21 und dem Additionseingang des Differenzverstärkers 20 zugeführt. Der Ausgang des Summationsverstärkers 20 ist über ein amplituden- und phasenkompensierendes Netzwerk 22 mit dem Eingang eines Modulators 23 verbunden, der die Lichtleistung des Lasers 1 steuert.

Aufgrund der von Vertiefungen gebildeten Pits auf dem speziellen Aufzeichnungsträger 5 würde die Intensität des reflektierten Lichts ständig schwanken und sich störend dem Datensignal am Ausgang des Differenzverstärkers 20 überlagern. Um diese Überlagerung zu vermeiden wird die Intensität des reflektierten Lichts mittels des Modulators 23 konstant gehalten, der den Laser 1 ansteuert.

Deshalb ist am Ausgang des Differenzverstärkers 20 das Datensignal MS abnehmbar, das die in den magnetischen Domänen des speziellen Aufzeichnungsträgers gespeicherten Daten darstellt. Die in den Pits enthaltenen Daten gehen dennoch nicht verloren, denn sie sind im Regelsignal des Modulators 23 enthalten. Daher ist am Ausgang des Modulators 23 gleichzeitig das Datensignal PS abnehmbar, das die in den Pits enthaltenen Daten darstellt.

In diesem Regelkreis, mit dem die Intensität des vom speziellen Aufzeichnungsträger 5 reflektierten Lichts mit dem Modulator 23 auf einen konstanten Wert geregelt wird, beeinflußt die Reflektivität bzw. der Reflektionsgrad des Aufzeichnungsträgers 5 die Regelkreisverstärkung und somit die Stabilität des Regelkreises.
Da Aufzeichnungsträger grundsätzlich herstellungsbedingt, durch Alterung oder Verschmutzung unterschiedliche Reflektionseigenschaften aufweisen, variiert die Regelkreisverstärkung in Abhängigkeit vom aktuell verwendeten Aufzeichnungsträger. An die Aufzeichnungsträger werden somit hohe Qualitätsanforderungen gestellt, um stets eine nur in engen Grenzen variierende Reflektivität zu gewährleisten. Wie die Praxis bereits mehrfach gezeigt hat, wird diesen Qualitätsanforderungen jedoch häufig nicht entsprochen, so daß derartige Aufzeichnungsträger in Abtastgeräten nicht, nicht zuverlässig oder nicht der erwarteten Qualität entsprechend verwendet werden konnten. Fälschlicher Weise wurde als Ursache für die mangelnde Qualität dann häufig das Abtastgerät und nicht der Aufzeichnungsträger angesehen. Um diesen Nachteil zu beseitigen und auch Aufzeichnungsträger minderer Qualität zuverlässig und mit optimalem Ergebnis in Abtastgeräten verwenden zu können, wird ein Abtastgerät mit Adaptation vorgeschlagen. Um die aus DE-OS 37 32 874 bekannte optische Abtastvorrichtung zu einem Abtastgerät mit Adaptation weiterzubilden, ist Fig. 2 entsprechend in der Verbindung des Summationsverstärkers 21 mit dem amplituden- und phasenkompensierenden Netzwerk 22 ein Kondensator C vorgesehen, sind eine Dividierbaugruppe 24 und ein Regelkreisverstärkungssteller 25 angeordnet und ist ein Ausgang des Lasermonitors 26 mit der Dividierbaugruppe 24 verbunden.
Um ein Verhältnis zwischen der vom Aufzeichnungsträger 5 reflektierten Lichtintensität und der zur Abtastung verwendeten Laserleistung zu bilden, sind Eingänge der Dividierbaugruppe 24 mit dem bereits genannten Lasermonitor 26 und dem Ausgang des Summationsverstärkers 21 verbunden. Der Ausgang der Dividierbaugruppe 24, der ein der Reflektivität des Aufzeichnungsträgers 5 entsprechendes Signal führt, ist zum Beeinflussen der Regelkreisverstärkung am Regelkreisverstärkungssteller 25 angeschlossen, der zwischen dem amplituden- und phasenkompensierenden Netzwerk 22 und dem Modulator 23 eingefügt ist. Dieser Regelkreisverstärkungssteller 25 kann beispielsweise ein in seiner Verstärkung einstellbarer Verstärker oder auch ein Dividierer sein. Er muß nicht zwingend zwischen dem amplituden- und phasenkompensierenden Netzwerk 22 und dem Modulator 23 angeordnet werden, sondern kann an beliebiger Stelle in die Kette zwischen Kondensator C und dem Laser 1 eingefügt werden. Der Kondensator C, der zwischen dem Ausgang des Summationsverstärkers 21 und dem Eingang des amplituden- und phasenkompensierenden Netzwerks 22 eingefügt wurde, dient insbesondere zur Gleichanteilabtrennung und mit dem Regelkreisverstärkungssteller 25 wird die Regelkreisverstärkung reziprok bzw. umgekehrt proportional zur Reflektivität des Aufzeichnungsträgers 5 eingestellt, so daß trotz unterschiedlicher Aufzeichnungsträger im Regelkreis stets eine konstante Regelkreisverstärkung vorhanden ist und dies erreicht wird, obwohl das Signal bedingt durch die Pits selbst Schwankungen unterliegt.
Der Vollständigkeit halber sind in Figur 2 weiterhin ein Fokusphotodetektor 15 und ein Trackphotodetektor 16 als Bestandteile von Servoregelkreisen dargestellt. Wie bereits erwähnt wurde, beeinflussen auch in diesen Regelkreisen unterschiedliche Aufzeichnungsträger 5 die jeweilige Regelkreisverstärkung. Auch hier kann das vorgeschlagene Adaptationsverfahren vorteilhaft angewendet werden, indem ein Verhältnis zwischen der vom Aufzeichnungsträger empfangenen Intensität und der aufgewendeten Laserleistung gebildet wird, mit dem dann die Regelkreisverstärkung eingestellt wird. Hierzu ist es jedoch nicht notwendig, die hinsichtlich des Laserregelkreises zur Adaptation vorgesehenen Mittel ein zweites Mal vorzusehen, da zum Beeinflussen der Regelkreisverstärkung in den Servoregelkreisen ebenfalls das bereits mit der Dividierbaugruppe 24 erzeugte Signal, das die Reflektivität des Aufzeichnungsträgers kennzeichnet, verwendet werden kann. Es ist grundsätzlich auch kein separater einstellbarer Regelkreisverstärker RKV oder Regelkreisverstärkungssteller 25 erforderlich, wenn in dem mit adaptiven Eigenschaften auszurüstenden Regelkreis bereits eine Einstellmöglichkeit für die Regelkreisverstärkung vorhanden ist, die dann in vorteilhafter Weise verwendet werden kann. Fig. 2 enthält weiterhin eine Linse 12, einen Strahlteiler 13 und eine Zylinderlinse 14, die als optische Mittel zur Versorgung der Photodetektoren 15, 16 vorgesehen sind. Bei den Baugruppen 18,19 handelt es sich um Strom-Spannungswandler, die vorgesehen sind, um die Signale der Photodetektoren 11,17 für die Weiterverarbeitung aufzubereiten.
Es sei nochmals betont, daß sich die Erfindung nicht nur auf die hier angegebenen Ausführungen beschränkt, sondern grundsätzlich zur Anpassung von allen Arten von Abtastgeräten an den Aufzeichnungsträger und in mehreren Regelkreisen gleichzeitig angewendet werden kann, wobei der hier verwendete Begriff Abtastgerät sowohl Aufzeichnungsgeräte als auch Wiedergabegeräte einschließt.

## Patentansprüche

1. Aufzeichnungs- und/oder Wiedergabegerät für optische Aufzeichnungsträger mit Mitteln zum Anpassen eines Regelkreises an die Reflektivität des optischen Aufzeichnungsträgers, **dadurch gekennzeichnet**, daß ein Laserregelkreis mit einem Mittel zum Bilden des Verhältnisses vom Aufzeichnungsträger reflektierten Lichts zur Abtastleistung des Lasers vorgesehen ist, und der Ausgang des Mittels mit einem die Regelkreisverstärkung im Laserregelkreis reziprok zur Reflektivität beeinflussenden Anschluß verbunden ist.

2. Aufzeichnungs- und/oder Wiedergabegerät nach Anspruch 1, **dadurch gekennzeichnet**, daß das Mittel zum Bilden des Verhältnisses ein Dividierer (DIV) ist, der mit einer Vorrichtung (INT) zum Detektieren des vom Aufzeichnungsträger (IT) reflektierten Lichts und mit einem Anschluß verbunden ist, der ein Maß der aufgewendeten Abtastleistung des Lasers bereitstellt.

3. Aufzeichnungs- und/oder Wiedergabegerät nach einem der Ansprüche 1 und 2, **dadurch gekennzeichnet**, daß in einem bekannten Gerät zur Aufzeichnung oder Wiedergabe mit einem Pits und magnetische Domänen enthaltenden Aufzeichnungsträger (5), zum Regeln vom Aufzeichnungsträger (5) reflektierten Lichts auf einen konstanten Wert, die Regelkreisverstärkung im Laserregelkreis mit dem Ausgangssignal einer Dividierbaugruppe (24) eingestellt wird, die an einem Ausgang eines Summationsverstärkers (21) zum Detektieren vom Aufzeichnungsträger (5) reflektierten Lichts und an einem, ein Maß der Abtastleistung des Lasers bereitstellenden Lasermonitor (26) angeschlossen ist.

## Claims

1. Recording and/or playback machine for optical recording carriers having means for adapting a control circuit to the reflectivity of the optical recording carrier, characterized in that a laser control circuit having a means for forming the ratio of the light reflected by the recording carrier to the laser pick-up power is provided, and the output of the means is connected to a terminal influencing the control loop gain in the laser control loop reciprocally with respect to the reflectivity.

2. Recording and/or playback machine according to Claim 1, characterized in that the means for forming the ratio is a divider (DIV), which is connected to a device (INT) for detecting the light reflected by the recording carrier (IT) and to a terminal which provides a measure of the laser pick-up power expended.

3. Recording and/or playback machine according to one of Claims 1 or 2, characterized in that, in a known machine for recording or playback with a recording carrier (5) containing pits and magnetic domains, for controlling the light reflected by the recording carrier (5) to a constant value the control loop gain in the laser control loop is set by the output signal of a dividing module (24), which is connected to an output of a summation amplifier (21), for detecting the light reflected by the recording carrier (5), and to a laser monitor (26), providing a measure of the laser pick-up power.

## Revendications

1. Dispositif d'enregistrement et/ou de reproduction pour supports d'enregistrement optiques avec dispositifs d'adaptation d'un circuit de réglage à la réflexibilité du support d'enregistrement optique, **caractérisé en ce qu**'un circuit de réglage laser est prévu avec un dispositif de réalisation de la proportion de lumière réfléchie par le support d'enregistrement par rapport à la puissance de balayage du laser, et la sortie du dispositif est reliée à une borne influençant l'amplification du circuit de réglage dans le circuit de réglage laser de manière inversement proportionnelle à la réflexibilité.

2. Dispositif d'enregistrement et/ou de reproduction conforme à la revendication 1, **caractérisé en ce que** le dispositif de réalisation de la proportion est un diviseur numérique (DIV) relié à un dispositif (INT) de détection de la lumière réfléchie par le support d'enregistrement (IT) et à une borne qui fournit une mesure de la puissance de balayage du laser dépensée.

3. Dispositif d'enregistrement et/ou de reproduction conforme à l'une des revendications 1 et 2, **caractérisé en ce que,** dans un dispositif connu d'enregistrement ou de reproduction avec un support d'enregistrement (5) contenant des cavités (pits) et des domaines magnétiques et pour effectuer le réglage sur une valeur constante du faisceau réfléchi par le support d'enregistrement (5), l'amplification du circuit de réglage dans le circuit de réglage laser est mise au point grâce au signal de sortie d'un module diviseur (24) relié à une sortie d'un amplificateur de sommation (21) pour détecter le faisceau réfléchi par le support d'enregistrement (5) et à un moniteur laser (26) qui fournit une mesure de puissance de balayage du laser.
